(19) Europäisches Patentamt
European Patent Office
Office européen des brevets

(11) **EP 3 264 139 A1**

(12) **DEMANDE DE BREVET EUROPEEN**

(43) Date de publication:
**03.01.2018 Bulletin 2018/01**

(51) Int Cl.:
***G01T 1/22*** *(2006.01)* ***G01T 3/00*** *(2006.01)*

(21) Numéro de dépôt: **17177971.3**

(22) Date de dépôt: **26.06.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **27.06.2016 FR 1655987**

(71) Demandeur: **Commissariat à l'énergie atomique et aux énergies alternatives**
**75015 Paris (FR)**

(72) Inventeurs:
• **BOBIN, Christophe**
  **91400 ORSAY (FR)**
• **THIAM, Cheick-Oumar**
  **92340 BOURG LA REINE (FR)**

(74) Mandataire: **Brevalex**
**95, rue d'Amsterdam**
**75378 Paris Cedex 8 (FR)**

(54) **TÊTE DE DÉTECTION ET ACTIVIMÈTRE ASSOCIÉ**

(57)     L'invention concerne une tête de détection (4) comportant un organe sensible (8) et un organe de couplage (10), l'organe sensible (8) comprenant une paroi (14) réalisée dans un matériau diélectrique, le matériau diélectrique étant transparent dans une plage de longueur d'onde prédéterminée, le matériau diélectrique étant propre à émettre des photons s'il est traversé par des électrons présentant une énergie supérieure ou égale à un seuil Cherenkov prédéterminé, l'organe de couplage (10) étant adapté pour collecter les photons émis par la paroi (14) de l'organe sensible (8).

FIG. 1

EP 3 264 139 A1

## Description

### DOMAINE TECHNIQUE

La présente invention concerne une tête de détection. L'invention concerne également un activimètre.

L'invention s'applique au domaine de la mesure d'activité nucléaire, en particulier à la mesure de l'activité d'un produit radioactif.

### ÉTAT DE LA TECHNIQUE ANTÉRIEURE

Dans le domaine de la médecine nucléaire, il est connu d'utiliser un activimètre pour mesure l'activité d'un produit radioactif à administrer à un patient, par exemple pour des applications diagnostiques ou des applications thérapeutiques. Une telle activité est exprimée en becquerel.

Le produit radioactif comprend au moins une espèce chimique propre à se désintégrer selon une réaction de désintégration classiquement connue, en émettant au moins une particule dite « particule ionisante ». Une telle espèce chimique est appelée « radionucléide ».

Il est connu d'utiliser, dans les hôpitaux, des chambres d'ionisation à puits en guise d'activimètre [Schrader]. En général, de telles chambres d'ionisation à puits présentent une grande stabilité dans le temps, une grande reproductibilité des mesures et une linéarité des mesures sur une plage de mesure importante (par exemple, selon les radionucléides, la dynamique de la chambre d'ionisation s'étend du mégabecquerel au gigabecquerel).

Une chambre d'ionisation à puits comporte classiquement une enceinte concave définissant un puits destiné à accueillir un échantillon du produit radioactif, par exemple une solution radioactive. L'échantillon est généralement stocké dans une ampoule, un flacon ou une seringue.

De façon classique, l'enceinte présente une paroi interne et une paroi externe. Chacune des parois interne et externe présente la forme d'un cylindre creux s'étendant le long d'un axe longitudinal et fermé à l'une de ses extrémités par un fond. Les parois interne et externe sont concentriques, avec leurs axes longitudinaux respectifs confondus. La partie creuse de la paroi interne définit le puits. En outre, les parois interne et externe sont jointives par leur bord libre. Les parois interne et externe définissent, entre leurs surfaces en regard, un volume interne, de préférence un volume interne fermé. Le volume interne comprend classiquement un gaz, généralement un gaz sous pression, propre à interagir avec un rayonnement ionisant pour émettre au moins un électron et/ou un photon. Un tel gaz est, par exemple, de l'argon ou de l'azote.

L'enceinte présente, en outre, des électrodes, par exemple deux électrodes cylindriques concentriques, s'étendant chacune le long d'un axe directeur.

L'axe directeur de chaque électrode est, par exemple, confondu avec l'axe longitudinal des parois interne et externe. Par exemple, chacune des électrodes est disposée dans le volume interne, au contact de l'une des surfaces en regard des parois interne et externe. Chacune des électrodes est propre à être portée à un potentiel différent.

En fonctionnement, un échantillon du produit radioactif est disposé sur un porte-échantillon situé dans le puits. En outre, les électrodes sont portées à des potentiels différents.

La tension appliquée entre les électrodes conduit à une collecte quasi complète des électrons émis lors de l'ionisation du gaz suite à l'interaction dudit gaz avec une particule ionisante. Une telle collecte conduit à la circulation d'un courant d'ionisation. La tension appliquée entre les électrodes limite, en outre, le phénomène de recombinaison.

En général, un tel courant d'ionisation est proportionnel à l'activité du radionucléide, c'est-à-dire au nombre moyen de désintégrations par seconde, et au dépôt d'énergie des particules ionisantes dans le gaz suite à chaque désintégration. La mesure du courant d'ionisation donne accès à l'activité de la solution radioactive.

En général, lors d'une telle mesure d'activité, l'énergie déposée dans le gaz présent dans le volume interne de la chambre d'ionisation à puits provient principalement d'un rayonnement photonique. Un tel rayonnement photonique comprend des rayons X et rayons $\gamma$, issus de la désintégration du produit radioactif, et des photons de bremsstrahlung.

Il est connu que les photons de bremsstrahlung sont rayonnés par des particules chargées subissant une décélération durant leur parcours. Ainsi, lors d'une telle mesure d'activité, les photons de bremsstrahlung sont rayonnés par les particules chargées qui sont émises par le produit radioactif lors d'une désintégration de type $\beta$, à savoir des électrons dans le cas d'une désintégration de type $\beta^-$, ou des positrons dans le cas d'une désintégration de type $\beta^+$).

Dans des conditions optimales, de telles chambres d'ionisation conduisent généralement à une mesure d'activité présentant une incertitude-type composée relative inférieure à 1 %.

Néanmoins, de telles chambres d'ionisation à puits ne donnent pas entière satisfaction.

En effet, de telles chambres d'ionisation sont essentiellement adaptées à la mesure de l'activité de radionucléides émetteurs de photons X et/ou $\gamma$.

Or, dans le cas de radionucléides émetteurs $\beta^-$ purs, la réponse de la chambre d'ionisation est due essentiellement à l'interaction du gaz avec les photons de bremsstrahlung rayonnés par les électrons émis par le(s) radionucléide(s) émetteurs $\beta^-$ purs, le long du parcours desdits électrons à travers les différents éléments du détecteur (solution radioactive, flacon, porte-échantillon, paroi interne, etc.).

En outre, selon la conception de la chambre d'ionisation, une partie des électrons émis dans la solution radioactive, dits « électrons de haute énergie », c'est-à-dire les électrons présentant une énergie de l'ordre de 2 MeV (mégaélectronvolt) ou plus, sont susceptibles d'atteindre le volume sensible du détecteur et de contribuer directement au courant d'ionisation.

La réponse de la chambre d'ionisation est ainsi sensible au transport des électrons dans les différents éléments du détecteur.

Ainsi, pour les émetteurs β⁻ purs de haute énergie, c'est-à-dire les radionucléides se désintégrant par radioactivité β⁻ en émettant des électrons de haute énergie, des études décrites dans la littérature montrent que la mesure d'activité présente une variabilité de plusieurs pourcents, et n'est donc pas fiable [Santos] [Thiam] [Fenwick]. C'est par exemple le cas de l'yttrium ⁹⁰Y, qui se désintègre généralement en émettant des électrons présentant une énergie susceptible d'atteindre une valeur maximale $E_{max}$ égale à 2280 keV (kiloélectronvolt).

Un but de l'invention est donc de proposer un activimètre qui soit plus fiable que les chambres d'ionisation à puits de l'état de la technique, notamment pour la mesure de l'activité de produit radioactifs comprenant des radionucléides émetteurs β⁻ purs.

## EXPOSÉ DE L'INVENTION

A cet effet, l'invention a pour objet une tête de détection du type précité, comportant un organe sensible et un organe de couplage, l'organe sensible comprenant une paroi réalisée dans un matériau diélectrique, le matériau diélectrique étant transparent dans une plage de longueur d'onde prédéterminée, le matériau diélectrique étant propre à émettre des photons s'il est traversé par des électrons présentant une énergie supérieure ou égale à un seuil Cherenkov prédéterminé, l'organe de couplage étant adapté pour collecter les photons émis par la paroi de l'organe sensible.

Dans une telle tête de détection, l'interaction entre l'organe sensible et une partie des particules chargées de haute énergie émises par un émetteur β pur de haute énergie (en particulier des électrons de haute énergie émis par un émetteur β⁻ pur de haute énergie) entraîne indirectement la génération de photons par effet Cherenkov. Plus précisément, les particules chargées de haute énergie rayonnent en émettant des photons de bremsstrahlung. De tels photons de bremsstrahlung atteignent l'organe sensible dans lequel des électrons secondaires sont générés par effet Compton. Les électrons secondaires génèrent à leur tour, par effet Cherenkov, des photons Cherenkov.

Les photons Cherenkov générés sont disponibles au niveau de l'organe de couplage pour être détectés. Ainsi, les inconvénients liés aux chambres d'ionisation, décrits précédemment, sont évités.

La détection de tels photons Cherenkov dans un milieu diélectrique transparent à la place d'une mesure fondée sur l'ionisation d'un gaz, comme cela serait le cas dans une chambre d'ionisation, confère, par exemple, une sensibilité moindre à la distribution de l'énergie déposée dans l'organe sensible, et donc une plus grande fiabilité de la mesure. En outre, dans une telle tête de détection, l'émission des photons à détecter se fondant sur l'effet Cherenkov, le risque de saturation lors de la détection est réduit.

En effet, dans une chambre d'ionisation, le courant mesuré dépend de toute l'énergie déposée dans le gaz par les photons de bremsstrahlung. Or, le spectre en énergie des photons de bremsstrahlung est sensible au transport des électrons émis par le radionucléide le long de leur parcours dans les différents éléments de l'activimètre. En conséquence, dans une chambre d'ionisation, la fiabilité des mesures est grandement liée à la reproductibilité des conditions de mesure, par exemple, à la variabilité de la géométrie du flacon ou de l'ampoule recevant l'échantillon de produit radioactif.

Le recours à l'effet Cherenkov autorise la réalisation de mesures d'activité se fondant sur un comptage d'impulsions, et non plus sur une mesure de courant d'ionisation.

En outre, lors d'un tel comptage d'impulsions, seule la partie de l'énergie déposée par un électron Compton qui dépasse le seuil Cherenkov est prise en compte pour la détection de l'électron Compton dans l'organe sensible, et donc pour la mesure de l'activité de l'échantillon, et non la totalité de l'énergie déposée dans l'organe sensible. L'influence de la variabilité du transport des électrons dans le détecteur se réduit aux fluctuations autour du seuil Cherenkov. Ainsi, la mise en oeuvre de la tête de détection selon l'invention autorise une mesure qui est peu sensible au spectre en énergie des photons de bremhsstralung. Par conséquent, le recours à un tel comptage d'impulsions conduit à sensibilité moindre à la variabilité des conditions de mesure, par rapport à une chambre d'ionisation classique.

En outre, un tel comptage limite les phénomènes de saturation.

La tête de détection selon l'invention présente, en outre, un avantage résidant dans le fait que le niveau du seuil Cherenkov est déterminé, notamment, par le choix du matériau diélectrique dans lequel est réalisée la paroi de l'organe sensible. La fabrication de têtes de détection présentant des niveaux de seuil Cherenkov différents, et donc des rendements de détection (tels que définis ultérieurement) différents, est aisément réalisée en modifiant la nature du matériau diélectrique. Plus le seuil Cherenkov sera élevé, plus le rendement de détection sera faible et donc plus les phénomènes de saturation pour la mesure d'activité seront limités. Ceci rend possible la mesure d'activités pouvant atteindre la dizaine de gigabecquerels.

Suivant d'autres aspects avantageux de l'invention, la tête de détection comporte une ou plusieurs des caractéristiques suivantes, prise(s) isolément ou suivant toutes les combinaisons techniquement possibles :

- l'organe sensible comprend, en outre, une pellicule recouvrant la paroi et réalisée dans un matériau propre à réfléchir les photons appartenant à au moins une partie de la plage de longueur d'onde prédéterminée ;
- l'organe sensible comprend, en outre, une couche de protection, recouvrant la paroi et réalisée dans un matériau propre à arrêter les photons dont la longueur d'onde appartient à la plage de longueur d'onde prédéterminée ;
- l'organe sensible comprend, en outre, une pellicule recouvrant la paroi et réalisée dans un matériau propre à réfléchir les photons appartenant à au moins une partie de la plage de longueur d'onde prédéterminée, la pellicule étant disposée entre la paroi et la couche de protection ;
- l'organe de couplage comprend un filtre optique propre à filtrer les photons dont la longueur d'onde n'appartient pas à un intervalle de longueur d'onde prédéterminé ;
- la paroi de l'organe sensible délimite un volume interne concave adapté pour recevoir l'échantillon ;
- la tête de détection comprend un porte-échantillon adapté pour recevoir l'échantillon et disposé dans le volume interne de l'organe sensible ; et
- la tête de détection comprend, en outre, au moins un détecteur relié à l'organe de couplage, l'organe de couplage étant configuré pour acheminer, vers l'au moins un détecteur, au moins une partie des photons collectés en provenance de la paroi, l'au moins un détecteur étant propre à générer, à partir des photons acheminés par l'organe de couplage, un signal électrique représentatif de l'activité de l'échantillon.

En outre, l'invention a pour objet un activimètre comportant une tête de détection telle que définie ci-dessus, et une unité de mesure, la tête de détection étant propre à délivrer un signal d'activité représentatif de l'activité nucléaire d'un échantillon, et l'unité de mesure étant configurée pour mesurer l'activité de l'échantillon à partir du signal d'activité délivré par la tête de détection.

**BRÈVE DESCRIPTION DES DESSINS**

L'invention sera mieux comprise à l'aide de la description qui va suivre, donnée uniquement à titre d'exemple non limitatif et faite en se référant aux dessins annexés sur lesquels :

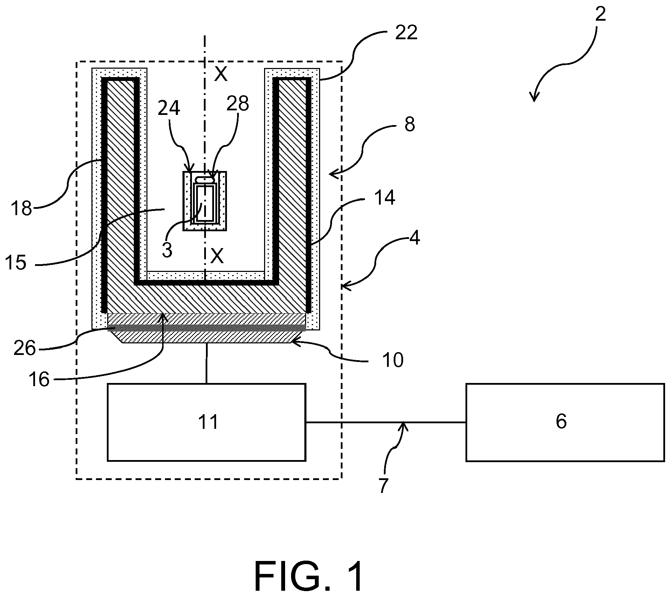

- la figure 1 est une représentation schématique d'un activimètre selon l'invention, la tête de détection de l'activimètre étant représentée en section dans un plan comprenant un axe longitudinal de la tête de détection.

**EXPOSÉ DÉTAILLÉ DE MODES DE RÉALISATION PARTICULIERS**

Un activimètre 2 selon l'invention est représenté sur la figure 1. L'activimètre 2 est configuré pour mesurer l'activité d'un échantillon 3 d'un produit radioactif à tester.

L'activimètre 2 comporte une tête de détection 4 et une unité de mesure 6. La tête de détection 4 et l'unité de mesure 6 sont reliées entre elles par une liaison 7.

La tête de détection 4 est propre à générer un signal d'activité représentatif de l'activité de l'échantillon 3.

L'unité de mesure 6 est configurée pour calculer l'activité de l'échantillon 3 à partir du signal d'activité.

La tête de détection 4 comporte un organe sensible 8, un organe de couplage 10 et un détecteur 11.

L'organe sensible 8 est adapté pour capter des particules ionisantes émises par l'échantillon 3. En particulier, l'organe sensible 8 est adapté pour capter des particules ionisantes chargées émises par l'échantillon 3. En outre, l'organe sensible 8 est adapté pour émettre des photons lors d'une interaction avec des particules ionisantes émises par l'échantillon 3. Une telle interaction sera décrite ultérieurement.

L'organe de couplage 10 est configuré pour collecter les photons Cherenkov émis par l'organe sensible 8. En particulier, l'organe de couplage 10 est configuré pour acheminer au moins une partie des photons collectés vers le détecteur 11.

Le détecteur 11 est configuré pour générer un signal électrique, formant le signal d'activité, à partir des photons acheminés par l'organe de couplage 10.

L'organe sensible 8 comprend une paroi 14.

La paroi 14 s'étend le long d'un axe longitudinal X-X. De préférence, la paroi 14 présente la forme un cylindre, par exemple un cylindre fermé à l'une de ses extrémités. La paroi 14 délimite un volume interne 15 concave.

De préférence, la paroi 14 comprend une zone 16 de coopération de l'organe sensible 8 avec l'organe de couplage 10. Par exemple, la zone de coopération 16 est une zone de contact de l'organe sensible 8 avec l'organe de couplage 10.

La paroi 14 est réalisée dans un matériau sensible. Le matériau sensible est un matériau diélectrique. Le matériau sensible est transparent dans une plage de longueur d'onde prédéterminée. Par exemple, le matériau sensible est du verre, de la silice fondue, un polymère, un plastique, ou encore un gel. Par exemple, une telle plage de longueur d'onde prédéterminée correspond à des énergies inférieures à quelques dizaines d'électronvolts.

Le matériau sensible présente un indice de réfraction n. L'indice de réfraction n dépend de la longueur d'onde de la lumière qui le traverse. Par exemple, dans le cas de la silice fondue, l'indice de réfraction n vaut 1,47 pour une longueur d'onde égale à 400 nm ; en outre, l'indice de réfraction n vaut 1,64 pour une longueur d'onde égale à 160 nm.

Le matériau sensible présente un seuil $E_c$, dit « seuil Cherenkov », tel que, si le matériau sensible est traversé par une particule chargée présentant une énergie cinétique supérieure ou égale au seuil Cherenkov $E_c$, le matériau sensible émet des photons par effet Cherenkov. La particule chargée est, par exemple, une particule ionisante chargée émise par l'échantillon 3, par exemple un électron ou un positron.

Le seuil Cherenkov $E_c$ dépend de l'indice de réfraction n du matériau sensible. En outre, l'indice de réfraction n du matériau sensible dépend du matériau sensible et de la longueur d'onde de la lumière qui traverse le matériau sensible.

Le seuil Cherenkov $E_c$, pour un électron ou un positron, exprimé en keV, s'obtient par la formule (1) :

$$E_c = 511 \times \left( \sqrt{\frac{1}{1-n^{-2}}} - 1 \right) \ (1).$$

Par exemple, dans le cas de la silice fondue, le seuil Cherenkov $E_c$ vaut 186 keV à 400 nm, longueur d'onde à laquelle l'indice de réfraction n vaut 1,47. En outre, le seuil Cherenkov $E_c$ vaut 133 keV à 160 nm, longueur d'onde à laquelle l'indice de réfraction n vaut 1,64.

Selon un autre exemple, pour un aérogel de silice présentant un indice de réfraction inférieur ou égal à 1,1 dans le domaine du visible, le seuil Cherenkov $E_c$ est supérieur ou égal à 716 keV.

Avantageusement, l'organe sensible 8 comprend également une pellicule 18. La pellicule 18 recouvre la paroi 14. De préférence, la pellicule 18 recouvre l'ensemble de la paroi 14, à l'exception de la zone de coopération 16.

La pellicule 18 est réalisée dans un matériau réfléchissant. Le matériau réfléchissant est propre à réfléchir les photons appartenant à au moins une partie de la plage de longueur d'onde prédéterminée. En particulier, le matériau réfléchissant est propre à réfléchir les photons émis par effet Cherenkov dans le matériau sensible de la paroi 14. Par exemple, le matériau réfléchissant est le polytétrafluoroéthylène, également connu sous l'acronyme « PTFE » ou sous le nom commercial de « téflon ».

Avantageusement, l'organe sensible 8 comprend, en outre, une couche de protection 22. La couche de protection 22 recouvre la paroi 14. De préférence, la couche de protection 22 recouvre l'ensemble de la paroi 14, à l'exception de la zone de coopération 16. De préférence encore, la couche de protection 22 recouvre toute partie de l'organe de couplage 10 qui est susceptible de capter des photons ne provenant pas de la zone de coopération 16.

La couche de protection 22 est réalisée dans un matériau propre à arrêter, en particulier absorber, les photons dont la longueur d'onde appartient à la plage de longueur d'onde prédéterminée, tels que des photons parasites provenant de sources externes à la tête de détection 4. En particulier, La couche de protection 22 est réalisée dans un matériau propre à absorber les photons dont la longueur d'onde appartient à la plage de longueur d'onde prédéterminée. Par exemple, la couche de protection 22 est réalisée en polyoxyméthylène, également connu sous l'acronyme « POM » ou sous le nom commercial de « Delrin », en particulier en POM noir.

Dans le cas de la présence de la pellicule 18 et de la couche de protection 22, la pellicule 18 est disposée entre la paroi 14 et la couche de protection 22.

Avantageusement, l'organe sensible 8 comporte, en outre, un porte-échantillon 24. Le porte-échantillon 24 est disposé dans le volume interne 15 de l'organe sensible 8. Le porte-échantillon 24 est, par exemple, réalisé dans le même matériau que la couche de protection 22.

De préférence, l'organe de couplage 10 comprend un filtre optique 26 adapté pour filtrer les photons dont la longueur d'onde n'appartient pas à un intervalle de longueur d'onde prédéterminé, de façon à uniquement permettre le passage des photons dont la longueur d'onde appartient à l'intervalle de longueur d'onde prédéterminé. L'intervalle de longueur d'onde prédéterminé présente au moins une bande de longueur d'onde commune avec la plage de longueur d'onde prédéterminée.

En variante, le filtre optique 26 est configuré pour décaler la longueur d'onde des photons qui le traversent.

Le détecteur 11 est un photodétecteur classiquement connu. Par exemple, le détecteur 11 est un photomultiplicateur, ou encore une photodiode. Le détecteur 11 est propre à détecter les photons dont la longueur d'onde appartient à la plage de longueur d'onde prédéterminée. En particulier, le détecteur 11 est configuré pour générer un signal électrique formant le signal d'activité à partir des photons acheminés par l'organe de couplage 10 et détectés par le détecteur 11.

Le détecteur 11 est relié, en sortie, à la liaison 7, pour appliquer le signal d'activité à la liaison 7.

L'unité de mesure 6 est configurée pour calculer l'activité de l'échantillon 3 à partir du signal d'activité généré du détecteur 11 de la tête de détection 4.

L'unité de mesure 6 est propre à calculer l'activité de l'échantillon 3 selon une méthode dite « de spectrométrie d'énergie ». Dans ce cas, l'unité de mesure 6 est configurée pour détecter, dans le signal d'activité, les impulsions du signal d'activité qui présentent une amplitude supérieure ou égale à un seuil prédéterminé, dites « impulsions de détection ». Le seuil prédéterminé est, par exemple, choisi pour éviter une saturation lors du comptage des impulsions de détection.

L'unité de mesure 6 est également configurée pour compter, pendant un intervalle de temps prédéterminé, le nombre d'impulsions de détection. L'unité de mesure 6 est, en outre, configurée pour calculer l'activité de l'échantillon 3 à partir du nombre d'impulsions de détection comptées pendant l'intervalle de temps prédéterminé, selon un calcul détaillé ultérieurement.

En variante, la tête de détection 4 comporte au moins deux détecteurs 11.

Dans ce cas, les détecteurs 11 sont identiques. Chaque détecteur 11 est relié en sortie de l'organe de couplage 10. En outre, l'organe de couplage 10 est adapté pour délivrer un même signal optique à chacun des détecteurs 11 à partir des photons collectés en provenance de l'organe sensible 8.

Avantageusement, la liaison 7 comporte une pluralité de voies, chaque voie étant associée à un détecteur 11. Chaque voie est adaptée pour acheminer, vers l'unité de mesure 6, le signal électrique délivré par le détecteur 11 correspondant. Le signal d'activité est formé par l'ensemble des signaux électriques délivrés par les détecteurs 11.

Dans ce cas, l'unité de mesure 6 est propre à calculer l'activité de l'échantillon 3 selon une méthode dite « des coïncidences ». Dans ce cas, l'unité de mesure 6 est configurée pour calculer, au cours d'intervalles temporels successifs de durée prédéterminée, l'amplitude du signal électrique reçu depuis chaque détecteur 11 par l'intermédiaire de la voie correspondante de la liaison 7. L'unité de mesure 6 est également configurée pour comparer l'amplitude calculée associée à chaque détecteur 11 et à incrémenter un compteur de l'unité de mesure 6 si les amplitudes répondent à un critère prédéterminé par rapport à un seuil prédéterminé. Le seuil prédéterminé est, par exemple, choisi pour éviter une saturation lors du comptage des impulsions. Par exemple, un tel seuil de détection est réglé en-dessous de l'électron unique.

Pour la méthode de spectrométrie d'énergie et la méthode des coïncidences, les pertes de comptage sont avantageusement compensées en ayant recours à un circuit de temps mort tel que décrit dans les documents EP0574287A2 et EP2656111A1. Le fonctionnement d'un tel circuit de temps mort se fonde, par exemple, sur le principe connu de la mesure du temps actif et de temps morts de type reconductible.

Pour la méthode de spectrométrie d'énergie et la méthode des coïncidences, la durée des intervalles temporels successifs s'étend entre quelques secondes et quelques dizaines de secondes, en fonction de l'incertitude-type statistique attendue.

Par exemple, pour une solution de $^{90}$Y présentant une activité de 3 GBq, en faisant l'hypothèse de désintégrations régies par la loi de Poisson, il faut $10^6$ coups comptés pour atteindre une incertitude-type statistique de 0,1%. Si le rendement de détection est de $10^{-4}$ et le temps mort imposé de 5 $\mu$s, les intervalles temporels successifs présenteront une durée d'environ 15 s.

Par « rendement de détection », il est entendu, au sens de la présente invention, pour la méthode de spectrométrie d'énergie et la méthode des coïncidences, le rapport entre le taux de comptage, c'est-à-dire le nombre d'impulsions de détection par unité de temps, et l'activité de la source radioactive.

En variante, la tête de détection 4 n'est pas reliée à l'unité de mesure 6. Dans ce cas, la tête de détection comprend un organe d'écriture pour écrire le signal d'activité issu de la tête de détection 4 sur un support d'enregistrement. En outre, l'unité de mesure 6 comporte un organe de lecture adapté pour lire le support d'enregistrement. L'unité de mesure 6 est configurée pour calculer l'activité de l'échantillon 3 à partir du signal d'activité écrit sur le support d'enregistrement.

Le fonctionnement de l'activimètre 2 va maintenant être décrit.

L'activimètre 2 est d'abord étalonné, pour un radionucléide, un porte-échantillon 24 et un contenant 28 donnés, au cours d'une étape d'étalonnage.

Durant l'étape d'étalonnage, un étalon de référence du radionucléide, présentant une activité connue, contenu dans le contenant 28, est disposé sur le porte-échantillon 24 situé dans le volume interne 15 de la tête de détection 4.

Le taux de comptage calculé par l'unité de mesure 6 conduit à l'obtention d'un facteur d'étalonnage.

Par « facteur d'étalonnage », il est entendu, au sens de la présente invention, le rendement de détection pour un radionucléide, un contenant 28 et un porte-échantillon 24 donnés, c'est-à-dire le rapport entre le taux de comptage mesure et l'activité réelle de l'échantillon, pour un radionucléide, un contenant 28 et un porte-échantillon 24 donnés.

L'activimètre 2 formant un instrument secondaire du point de vue de la métrologie de la radioactivité, l'étape d'étalonnage est nécessaire pour déterminer le coefficient d'étalonnage pour un radionucléide donné, à partir du taux de comptage obtenu grâce à l'étalon de référence.

Puis, un échantillon 3 du produit radioactif à tester est disposé dans un contenant 28. Le contenant 28 est disposé dans le porte-échantillon 24 de l'organe sensible 8.

Les radionucléides présents dans l'échantillon 3 se désintègrent en émettant des particules ionisantes chargées. En particulier, les radionucléides présents dans l'échantillon 3 se désintègrent par radioactivité $\beta$ en émettant des électrons (dans le cas des radionucléides émetteurs $\beta^-$) ou des positrons (dans le cas des radionucléides émetteurs $\beta^+$). Lors de leur trajet, les particules ionisantes chargées émises rencontrent le contenant 28, le porte-échantillon 24, la couche de protection 22, la pellicule 18 et la paroi 14. Les particules ionisantes chargées décélèrent alors en rayonnant des photons de bremsstrahlung. Classiquement, les photons de bremsstrahlung présentent une longueur d'onde située en dehors de la plage de longueur d'onde prédéterminée. En général, les photons de bremsstrahlung présentent une longueur d'onde correspondant à une énergie supérieure au kiloélectronvolt.

Puis les photons de bremsstrahlung sont absorbés par la paroi 14, ce qui entraîne l'émission d'électrons secondaires, notamment par effet Compton.

Les électrons secondaires émis par la paroi 14 dont l'énergie cinétique est supérieure ou égale au seuil Cherenkov $E_c$ de la paroi 14 génèrent, dans la paroi 14, des photons Cherenkov, par effet Cherenkov.

La pellicule 18 réfléchit les photons Cherenkov dont la longueur d'onde appartient à la plage de longueur d'onde prédéterminée.

Les photons Cherenkov parviennent à la zone de coopération 16 et sont collectés par l'organe de couplage 10. Par exemple, les photons qui présentent une longueur d'onde n'appartenant pas à l'intervalle de longueur d'onde prédéterminé sont filtrés par le filtre 26 de l'organe de couplage 10.

L'organe de couplage 10 achemine les photons collectés, et éventuellement filtrés, vers chaque détecteur 11.

Chaque détecteur 11 détecte le signal optique reçu par l'intermédiaire de l'organe de couplage 10, et délivre, en sortie, un signal électrique représentatif de l'activité de l'échantillon 3.

Puis la liaison 7 achemine le signal électrique délivré par chaque détecteur 11 vers l'unité de mesure 6.

L'unité de mesure 6 calcule l'activité de l'échantillon 3 à partir du signal électrique délivré par chaque détecteur 11. Plus particulièrement, l'unité de mesure 6 calcule un taux de comptages corrigé du temps mort.

Puis, l'unité de mesure 6 multiplie le taux de comptage obtenu par le coefficient d'étalonnage correspondant au radionucléide, au porte-échantillon 24 et au contenant 28 utilisés pour obtenir l'activité de l'échantillon. En particulier, l'activité de l'échantillon étant fonction de la décroissance radioactive du radionucléide, l'unité de mesure 6 obtient, par un tel calcul, l'activité de l'échantillon à la date de la mesure ou, par exemple, l'activité de l'échantillon à une date différente de la date de la mesure.

Une telle tête de détection 4 présente une géométrie comparable à celle des chambres d'ionisation, ce qui autorise l'utilisation de la tête de détection 4 avec des contenants 28 similaires à ceux couramment utilisés avec les chambres d'ionisation. Une telle tête de détection présente, en outre, une grande facilité d'utilisation.

En outre, la géométrie d'une telle tête de détection 4 autorise une collecte de photons de bremsstrahlung dans un angle solide proche de $4\pi$ stéradians autour de l'échantillon du produit radioactif dont l'activité est mesurée, ce qui accroît la fiabilité de la mesure.

La présence de la couche de protection 22 autorise une protection contre des photons extérieurs parasitiques qui seraient susceptibles d'être détectés par le détecteur 11 et qui nuiraient à la fiabilité de la mesure d'activité.

La présence de la pellicule 18, destinée à réfléchir les photons appartenant à au moins une partie de la plage de longueur d'onde prédéterminée, accroît la probabilité de détection de tels photons par le détecteur 11.

La présence du filtre optique 26 propre à filtrer les photons dont la longueur d'onde n'appartient pas à l'intervalle de longueur d'onde prédéterminé améliore la fiabilité de la mesure et, par exemple, accroît le rapport signal sur bruit, par le filtrage des photons parasites, notamment les photons qui n'ont pas été générés par effet Cherenkov dans l'organe sensible 8.

En outre, par le choix de l'intervalle de longueur d'onde associé au filtre optique 26, un utilisateur est susceptible de réduire la bande spectrale des photons parvenant aux détecteurs 11. Ainsi, les photons Cherenkov dont la longueur d'onde n'appartient pas à l'intervalle de longueur d'onde prédéterminé ne parviennent pas aux détecteurs 11, ce qui réduit le rendement de détection et, par conséquent, limite le phénomène de saturation.

De préférence, la géométrie du porte-échantillon 24 est adaptée pour maximiser l'atténuation des électrons émis par désintégration $\beta^-$ du produit radioactif. Ceci a pour effet que l'énergie des électrons qui atteignent l'organe sensible 8 est inférieure au seuil Cherenkov. Dans ce cas, seul le bremsstrahlung créé dans le porte-échantillon 24 et le contenant 28 est susceptible d'atteindre l'organe sensible 8.

La détection selon le mode des coïncidences permet de s'affranchir du comptage parasite lié au bruit inhérent aux détecteurs 11.

En outre, malgré les phénomènes d'annihilation entre électrons et positrons conduisant à un rendement de détection théorique supérieur pour un émetteur $\beta^+$ pur que pour un radionucléide émetteur $\beta^-$ pur, l'activimètre 2 est apte à être utilisé pour la mesure de l'activité de radionucléides émetteurs $\beta^+$ purs.

## BIBLIOGRAPHIE

[Schrader] Schrader H., 2007. Ionization Chambers. Metrologia 44 S53-S66.

[Santos] Santos J.A.M., Dias A.G. et Bastos A. L., 2011. Characterization of geometric uncertainties of a dose calibrator during measurement of 90Y activity. J. Nucl. Med. Technol. 39, 125-130.

[Thiam] Thiam C., Bobin C., Lourenço V., Chisté V., Amiot M.-N., Mougeot X., Lacour D., Rigoulay F., Ferreux L., 2016. Investigation of the response variability of ionization chambers for the standard transfer of SIR-Spheres. Appl. Radiat. Isot. 109, 231-235.

[Fenwick] Fenwick A., Baker M., Ferreira K. et Keightley J., 2014. Comparison of 90Y and 177Lu measurement capability in UK and European hospitals. Appl. Radiat. and Isotopes 87, 10-13.

## Revendications

1. Activimètre (2) **caractérisé en ce qu'**il comporte une tête de détection (4) et une unité de mesure (6), la tête de détection (4) comportant un organe sensible (8) et un organe de couplage (10), l'organe sensible (8) comprenant une paroi (14) réalisée dans un matériau diélectrique, le matériau diélectrique étant transparent dans une plage de longueur d'onde prédéterminée, le matériau diélectrique étant propre à émettre des photons s'il est traversé par des électrons présentant une énergie supérieure ou égale à un seuil Cherenkov ($E_c$) prédéterminé,
l'organe de couplage (10) étant adapté pour collecter les photons émis par la paroi (14) de l'organe sensible (8),
la tête de détection (4) étant propre à délivrer un signal d'activité représentatif de l'activité nucléaire d'un échantillon (3), et l'unité de mesure (6) étant configurée pour mesurer l'activité de l'échantillon à partir du signal d'activité délivré par la tête de détection (4).

2. Activimètre (2) selon la revendication 1, dans lequel l'organe sensible (8) de la tête de détection (4) comprend, en outre, une pellicule (18) recouvrant la paroi (14) et réalisée dans un matériau propre à réfléchir les photons appartenant à au moins une partie de la plage de longueur d'onde prédéterminée.

3. Activimètre (2) selon la revendication 1, dans lequel l'organe sensible (8) de la tête de détection (4) comprend, en outre, une couche de protection (22), recouvrant la paroi (14) et réalisée dans un matériau propre à arrêter les photons dont la longueur d'onde appartient à la plage de longueur d'onde prédéterminée.

4. Activimètre (2) selon la revendication 3, dans lequel l'organe sensible (8) de la tête de détection (4) comprend, en outre, une pellicule (18) recouvrant la paroi (14) et réalisée dans un matériau propre à réfléchir les photons appartenant à au moins une partie de la plage de longueur d'onde prédéterminée, la pellicule (18) étant disposée entre la paroi (14) et la couche de protection (22).

5. Activimètre (2) selon l'une quelconque des revendications 1 à 4, dans lequel l'organe de couplage (10) de la tête de détection (4) comprend un filtre optique (26) propre à filtrer les photons dont la longueur d'onde n'appartient pas à un intervalle de longueur d'onde prédéterminé.

6. Activimètre (2) selon l'une quelconque des revendications 1 à 5, dans lequel la paroi (14) de l'organe sensible (8) de la tête de détection (4) délimite un volume interne (15) concave adapté pour recevoir l'échantillon (3).

7. Activimètre (2) selon la revendication 6, dans lequel la tête de détection (4) comprend un porte-échantillon (24) adapté pour recevoir l'échantillon (3) et disposé dans le volume interne (15) de l'organe sensible (8).

8. Activimètre (2) selon l'une quelconque des revendications 1 à 7, dans lequel la tête de détection (4) comprend, en outre, au moins un détecteur (11) relié à l'organe de couplage (10), l'organe de couplage (10) étant configuré pour acheminer, vers l'au moins un détecteur (11), au moins une partie des photons collectés en provenance de la paroi (14), l'au moins un détecteur (11) étant propre à générer, à partir des photons acheminés par l'organe de couplage (10), un signal électrique représentatif de l'activité de l'échantillon (3), ledit signal électrique constituant le signal d'activité.

FIG. 1

Europäisches
Patentamt

European
Patent Office

Office européen
des brevets

**RAPPORT DE RECHERCHE EUROPEENNE**

Numéro de la demande

EP 17 17 7971

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 1 527 452 A (ATOMENERGI AB) 31 mai 1968 (1968-05-31) | 1-6,8 | INV. G01T1/22 |
| Y | * page 1, colonne 2, lignes 5-32 - page 2, colonne 1, lignes 3,8-18,22-23,30-31,36-49; figure 1 * * page 2, colonne 2, lignes 1-19 * | 7 | G01T3/00 |
| | ----- | | |
| X | US 3 049 619 A (GENOVESE JR FRANK C) 14 août 1962 (1962-08-14) * page 1, colonne 1, lignes 1-55; figure 2 * * page 1, colonne 2, lignes 29-42,63 - page 2, colonne 3, lignes 3,57-75 * * page 3, colonne 5, lignes 1-4,15-16 * * page 2, colonne 4, lignes 68-74 * | 1,5,8 | |
| | ----- | | |
| Y | SCHRADER H: "Ionization chambers", METROLOGIA, INSTITUTE OF PHYSICS PUBLISHING, BRISTOL, GB, vol. 44, no. 4, 2 août 2007 (2007-08-02), pages S53-S66, XP020112483, ISSN: 0026-1394, DOI: 10.1088/0026-1394/44/4/S07 * alinéa [003.]; figure 1 * | 7 | DOMAINES TECHNIQUES RECHERCHES (IPC) G01T |
| | ----- | | |

Le présent rapport a été établi pour toutes les revendications

| Lieu de la recherche | Date d'achèvement de la recherche | Examinateur |
|---|---|---|
| La Haye | 27 juillet 2017 | Van Ouytsel, Krist'l |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 17 7971

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-07-2017

| Document brevet cité au rapport de recherche | | Date de publication | Membre(s) de la famille de brevet(s) | Date de publication |
|---|---|---|---|---|
| FR 1527452 | A | 31-05-1968 | AUCUN | |
| US 3049619 | A | 14-08-1962 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0574287 A2

- EP 2656111 A1

**Littérature non-brevet citée dans la description**

- **SCHRADER H.** *Ionization Chambers. Metrologia,* 2007, vol. 44, S53-S66
- **SANTOS J.A.M. ; DIAS A.G. ; BASTOS A. L.** Characterization of geometric uncertainties of a dose calibrator during measurement of Y activity. *J. Nucl. Med. Technol.,* 2011, vol. 39, 125-130

- **THIAM C. ; BOBIN C. ; LOURENÇO V. ; CHISTÉ V. ; AMIOT M.-N. ; MOUGEOT X. ; LACOUR D. ; RIGOULAY F. ; FERREUX L.** Investigation of the response variability of ionization chambers for the standard transfer of SIR-Spheres. *Appl. Radiat. Isot.,* 2016, vol. 109, 231-235
- **FENWICK A. ; BAKER M. ; FERREIRA K. ; KEIGHTLEY J.** Comparison of Y and Lu measurement capability in UK and European hospitals. *Appl. Radiat. and Isotopes,* 2014, vol. 87, 10-13